# EUROPEAN PATENT APPLICATION

(11) **EP 2 669 788 A1**
(43) Date of publication of application: **04.12.2013**
(21) Application number: 13002831.9
(22) Date of filing: 31.05.2013
(51) Int. Cl.: G06F 3/14, G09G 5/14

(54) **Mobile terminal and controlling method thereof**

(30) Priority: 31.05.2012 KR 20120058222
(71) Applicant: LG Electronics Inc., Yeongdeungpo-gu Seoul 150-721 (KR)
(72) Inventor: Kim, Miyoung, Geumcheon-gu 153-801 Seoul (KR); Hwang, Keumsung, Geumcheon-gu 153-801 Seoul (KR)
(74) Representative: Katérle, Axel

(57) **Abstract**

A mobile terminal and controlling method thereof are disclosed, by which at least one portion of contents of the mobile terminal can be displayed through an external digital device. The present invention may include establishing a data path with an external device including a 1^{st} display, selecting a 1^{st} application and a 2^{nd} application in the mobile terminal, displaying an execution screen of the 1^{st} application and an execution screen of the 2^{nd} application on a 1^{st} mirroring region and a 2^{nd} mirroring region of the 1^{st} display, respectively, and displaying a 1^{st} control means for controlling the 1^{st} application and a 2^{nd} control means for controlling the 2^{nd} application on a 1^{st} control region and a 2^{nd} control region of a 2^{nd} display provided to the mobile terminal, respectively.

## Description

### BACKGROUND OF THE INVENTION

### Field of the Invention

The present invention relates to a mobile terminal, and more particularly, to a mobile terminal and controlling method thereof. Although the present invention is suitable for a wide scope of applications, it is particularly suitable for displaying a content of the mobile terminal through an external digital device.

### Discussion of the Related Art

Generally, terminals can be classified into mobile/portable terminals and stationary terminals. The mobile terminals can be further classified into handheld terminals and vehicle mount terminals according to possibility of user's direct portability.

As functions of the terminal are getting diversified, the terminal tends to be implemented as a multimedia player provided with composite functions such as photographing of photos or videos, playback of music or video files, game play, broadcast reception and the like for example.

To support and increase the terminal functions, it may be able to consider the improvement of structural parts and/or software parts of the terminal.

Recently, an image sharing function of displaying an image displayed on a mobile terminal through a display device connected to the mobile terminal is provided. In particular, since the image sharing function is generally performed in a manner of exactly displaying a screen displayed on the mobile terminal through the external device, such a function can be called a mirroring. However, the general mirroring method causes a problem that an execution screen of one application can be shared with the external device at a time.

### SUMMARY OF THE INVENTION

Accordingly, the present invention is directed to a mobile terminal and controlling method thereof that substantially obviate one or more problems due to limitations and disadvantages of the related art.

An object of the present invention is to provide a mobile terminal and controlling method thereof, by which execution screens of a plurality of applications can be simultaneously displayed in sharing contents images of the mobile terminal through an external device.

Another object of the present invention is to provide a mobile terminal and controlling method thereof, by which a plurality of applications to be shared with an external device can be selected and controlled more conveniently.

Technical tasks obtainable from the present invention are non-limited the above-mentioned technical task. And, other unmentioned technical tasks can be clearly understood from the following description by those having ordinary skill in the technical field to which the present invention pertains.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method of controlling a mobile terminal may include the steps of establishing a data path with an external device including a 1^{st} display, selecting a 1^{st} application and a 2^{nd} application in the mobile terminal, displaying an execution screen of the 1^{st} application and an execution screen of the 2^{nd} application on a 1^{st} mirroring region and a 2^{nd} mirroring region of the 1^{st} display, respectively, and displaying a 1^{st} control means for controlling the 1^{st} application and a 2^{nd} control means for controlling the 2^{nd} application on a 1^{st} control region and a 2^{nd} control region of a 2^{nd} display provided to the mobile terminal, respectively.

In another aspect of the present invention, a mobile terminal according to the present invention may include a user input unit configured to receive an input of a command from a user, a communication unit configured to communicate with an external device including a 1^{st} display, a 2^{nd} display, and a controller configured to establish a data path with the external device via the communication unit, the controller, if a 1^{st} application and a 2^{nd} application are selected in accordance with a command input via the user input unit, controlling an execution screen of the 1^{st} application and an execution screen of the 2^{nd} application to be displayed on a 1^{st} mirroring region and a 2^{nd} mirroring region of the 1^{st} display, respectively, the controller controlling a 1^{st} control means for controlling the 1^{st} application and a 2^{nd} control means for controlling the 2^{nd} application to be displayed on a 1^{st} control region and a 2^{nd} control region of a 2^{nd} display provided to the mobile terminal, respectively.

Accordingly, the present invention provides the following effects and/or advantages.

First of all, a mobile terminal facilitates execution screens of a plurality of applications to be shared with an external device.

Secondly, display states of a plurality of applications shared with an external device can be conveniently changed or controlled.

Effects obtainable from the present invention may be non-limited by the above mentioned effect. And, other unmentioned effects can be clearly understood from the following description by those having ordinary skill in the technical field to which the present invention pertains.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a mobile terminal according to one embodiment of the present invention;

FIG. 2 is a front perspective diagram of a mobile terminal according to one embodiment of the present invention;

FIG. 3 is a front diagram of a mobile terminal according to one embodiment of the present invention to describe one operating status thereof;

FIG. 4 is a diagram for one example of connected configurations of digital devices applicable to embodiments of the present invention;

FIG. 5 is a flowchart for one example of a process for displaying execution screens of a plurality of applications through an external device according to one embodiment of the present invention;

FIG. 6 is a diagram for one example of a process for sharing mirroring images of a plurality of applications in a mobile terminal with an external device according to one embodiment of the present invention;

FIG. 7 is a diagram for one example of a switching between mirroring regions and a mirroring UI configuration changed in response to the switching in a mobile terminal according to one embodiment of the present invention;

FIG. 8 is a diagram for one example of a process for ending a mirroring target application in a mobile terminal according to one embodiment of the present invention;

FIG. 9 is a diagram for one example of an operation corresponding to an event occurrence in the course of an active mirroring mode in a mobile terminal according to one embodiment of the present invention;

FIG. 10 is a diagram for another example of an operation corresponding to an event occurrence in the course of an active mirroring mode in a mobile terminal according to one embodiment of the present invention;

FIG. 11 is a diagram for a further example of an operation corresponding to an event occurrence in the course of an active mirroring mode in a mobile terminal according to one embodiment of the present invention;

FIG. 12 is a diagram for one example of a process for activating an additional application in the course of an active mirroring mode in a mobile terminal according to another embodiment of the present invention; and

FIG. 13 is a diagram for another example of a process for activating an additional application in the course of an active mirroring mode in a mobile terminal according to another embodiment of the present invention.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes 'module', 'unit' and 'part' are used for elements in order to facilitate the disclosure only. Therefore, significant meanings or roles are not given to the suffixes themselves and it is understood that the 'module', 'unit' and 'part' can be used together or interchangeably.

The present invention can be applicable to a various types of terminals. Examples of such terminals include mobile as well as stationary terminals, such as mobile phones, user equipment, smart phones, DTV, computers, digital broadcast terminals, personal digital assistants, portable multimedia players (PMP) and navigators.

However, by way of non-limiting example only, further description will be with regard to a mobile terminal 100, and it should be noted that such teachings may apply equally to other types of terminals.

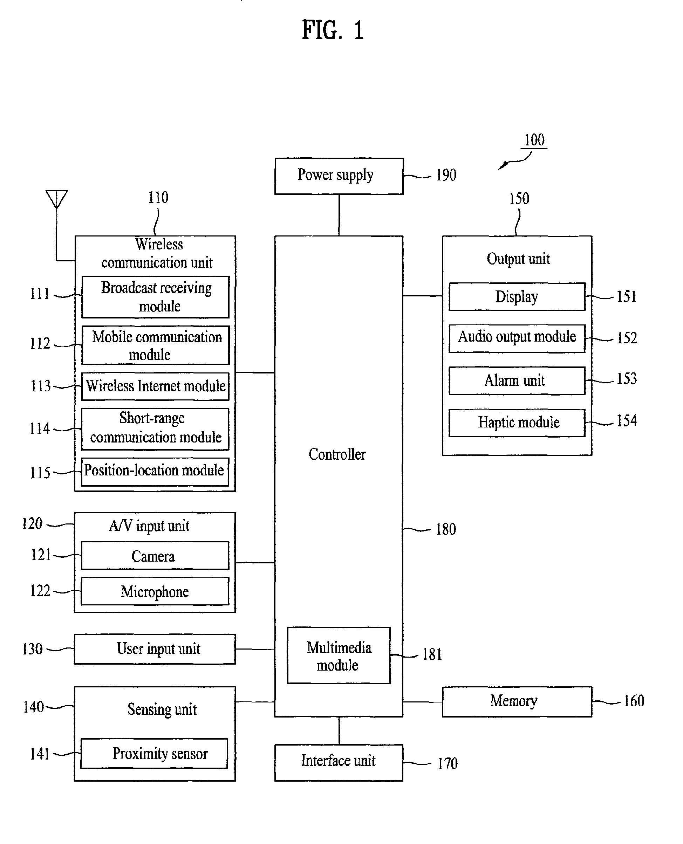

Fig. 1 is a block diagram of a mobile terminal 100 in accordance with an embodiment of the present invention. Fig. 1 shows the mobile terminal 100 according to one embodiment of the present invention includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

In the following description, the above elements of the mobile terminal 100 are explained in sequence.

First of all, the wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel.

The broadcast channel may include a satellite channel and a terrestrial channel.

The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, a broadcast service provider, etc. And, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.). Such wireless signals may represent audio, video, and data according to text/multimedia message transceivings, among others.

The wireless internet module 113 supports Internet access for the mobile terminal 100. This module may be internally or externally coupled to the mobile terminal 100. In this case, the wireless Internet technology can include WLAN(Wireless LAN) (Wi-Fi), Wibro (Wireless broadband), Wimax (World Interoperability for Microwave Access), HSDPA(High Speed Downlink Packet Access), LTE (Long Term Evolution), etc.

The short-range communication module 114 facilitates relatively short-range communications. Suitable technologies for implementing this module include radio frequency identification (RFID), infrared data association (IrDA), ultra-wideband (UWB), NFC (Near Field Communication) as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module.

Referring to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. And, the processed image frames can be displayed on the display 151.

The image frames processed by the camera 121 can be stored in the memory 160 or can be externally transmitted via the wireless communication unit 110. Optionally, at least two cameras 121 can be provided to the mobile terminal 100 according to environment of usage.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, a jog switch, etc.

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100.

As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. And, the sensing unit 140 can include a proximity sensor 141.

The output unit 150 generates outputs relevant to the senses of sight, hearing, touch and the like. And, the output unit 150 includes the display 151, an audio output module 152, an alarm unit 153, a haptic module 154 and the like.

The display 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented in a transparent or optical transmissive type, which can be named a transparent display. As a representative example for the transparent display, there is TOLED (transparent OLED) or the like. A rear configuration of the display 151 can be implemented in the optical transmissive type as well. In this configuration, a user is able to see an object in rear of a terminal body via the area occupied by the display 151 of the terminal body.

At least two displays 151 can be provided to the mobile terminal 100 in accordance with the implemented configuration of the mobile terminal 100. For instance, a plurality of displays can be arranged on a single face of the mobile terminal 100 in a manner of being spaced apart from each other or being built in one body. Alternatively, a plurality of displays can be arranged on different faces of the mobile terminal 100.

In case that the display 151 and a sensor for detecting a touch action (hereinafter called 'touch sensor') configures a mutual layer structure (hereinafter called 'touchscreen'), it is able to use the display 151 as an input device as well as an output device. In this case, the touch sensor can be configured as a touch film, a touch sheet, a touchpad or the like.

The touch sensor can be configured to convert a pressure applied to a specific portion of the display 151 or a variation of a capacitance generated from a specific portion of the display 151 to an electric input signal. Moreover, it is able to configure the touch sensor to detect a pressure of a touch as well as a touched position or size.

If a touch input is made to the touch sensor, signal(s) corresponding to the touch is transferred to a touch controller. The touch controller processes the signal(s) and then transfers the processed signal(s) to the controller 180. Therefore, the controller 180 is able to know whether a prescribed portion of the display 151 is touched.

Referring to FIG. 1, a proximity sensor (not shown in the drawing) can be provided to an internal area of the mobile terminal 100 enclosed by the touchscreen or around the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one of a transmissive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. In case that the touchscreen includes the electrostatic capacity proximity sensor, it is configured to detect the proximity of a pointer using a variation of electric field according to the proximity of the pointer. In this case, the touchscreen (touch sensor) can be classified as the proximity sensor.

In the following description, for clarity, an action that a pointer approaches without contacting with the touchscreen to be recognized as located on the touchscreen is named 'proximity touch'. And, an action that a pointer actually touches the touchscreen is named 'contact touch'. The meaning of the position on the touchscreen proximity-touched by the pointer means the position of the pointer which vertically opposes the touchscreen when the pointer performs the proximity touch.

The proximity sensor detects a proximity touch and a proximity touch pattern (e.g., a proximity touch distance, a proximity touch duration, a proximity touch position, a proximity touch shift state, etc.). And, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display 151 or the audio output unit 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of cold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures, moving pictures, etc. And, a recent use history or a cumulative use frequency of each data (e.g., use frequency for each phonebook, each message or each multimedia) can be stored in the memory unit 160. Moreover, data for various patterns of vibration and/or sound outputted in case of a touch input to the touchscreen can be stored in the memory unit 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. And, the mobile terminal 100 is able to operate in association with a web storage for performing a storage function of the memory 160 on Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component.

Moreover, the controller 180 is able to perform a pattern recognizing process for recognizing a writing input and a picture drawing input carried out on the touchscreen as characters or images, respectively.

The power supply unit 190 provides power required by the various components for the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

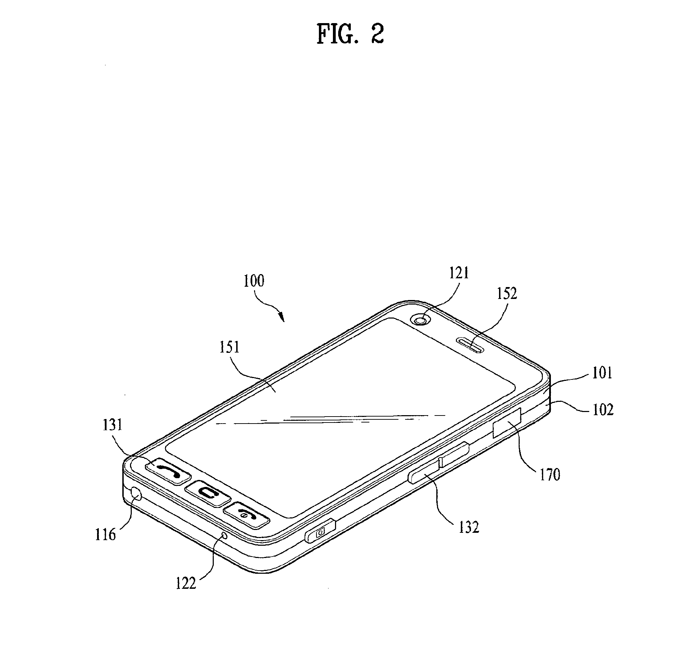

FIG. 2 is a front perspective diagram of a mobile terminal according to one embodiment of the present invention.

The mobile terminal 100 shown in the drawing has a bar type terminal body. Yet, the mobile terminal 100 may be implemented in a variety of different configurations. Examples of such configurations include folder-type, slide-type, rotational-type, swing-type and combinations thereof. For clarity, further disclosure will primarily relate to a bar-type mobile terminal 100. However such teachings apply equally to other types of mobile terminals.

Referring to FIG. 2, the mobile terminal 100 includes a case (casing, housing, cover, etc.) configuring an exterior thereof. In the present embodiment, the case can be divided into a front case 101 and a rear case 102. Various electric/electronic parts are loaded in a space provided between the front and rear cases 101 and 102. Optionally, at least one middle case can be further provided between the front and rear cases 101 and 102 in addition.

The cases 101 and 102 are formed by injection molding of synthetic resin or can be formed of metal substance such as stainless steel (STS), titanium (Ti) or the like for example.

A display 151, an audio output unit 152, a camera 121, user input units 130/131 and 132, a microphone 122, an interface 180 and the like can be provided to the terminal body, and more particularly, to the front case 101.

The display 151 occupies most of a main face of the front case 101. The audio output unit 151 and the camera 121 are provided to an area adjacent to one of both end portions of the display 151, while the user input unit 131 and the microphone 122 are provided to another area adjacent to the other end portion of the display 151. The user input unit 132 and the interface 170 can be provided to lateral sides of the front and rear cases 101 and 102.

The input unit 130 is manipulated to receive a command for controlling an operation of the terminal 100. And, the input unit 130 is able to include a plurality of manipulating units 131 and 132. The manipulating units 131 and 132 can be named a manipulating portion and may adopt any mechanism of a tactile manner that enables a user to perform a manipulation action by experiencing a tactile feeling.

Content inputted by the first or second manipulating unit 131 or 132 can be diversely set. For instance, such a command as start, end, scroll and the like is inputted to the first manipulating unit 131. And, a command for a volume adjustment of sound outputted from the audio output unit 152, a command for a switching to a touch recognizing mode of the display 151 or the like can be inputted to the second manipulating unit 132.

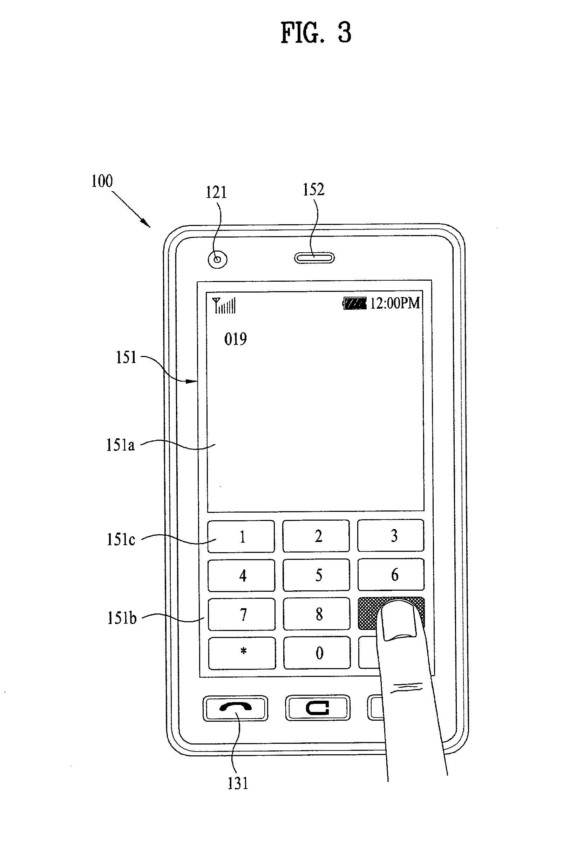

Interconnected operational mechanism between the display 151 and the touchpad 135 are explained with reference to FIG. 3 as follows.

FIG. 3 is a front-view diagram of a terminal according to one embodiment of the present invention for explaining an operational state thereof.

First of all, various kinds of visual information can be displayed on the display 151. And, theses information can be displayed in characters, numerals, symbols, graphics, icons and the like.

In order to input the information, at least one of the characters, numerals, symbols, graphics and icons are represented as a single predetermined array to be implemented in a keypad formation. And, this keypad formation can be so-called 'soft keys'.

FIG. 3 shows that a touch applied to a soft key is inputted through a front face of a terminal body.

The display 151 is operable through an entire area or by being divided into a plurality of regions. In the latter case, a plurality of the regions can be configured interoperable.

For instance, an output window 151a and an input window 151b are displayed on the display 151. A soft key 151c' representing a digit for inputting a phone number or the like is outputted to the input window 151b. If the soft key 151c' is touched, a digit corresponding to the touched soft key is outputted to the output window 151a. If the first manipulating unit 131 is manipulated, a call connection for the phone number displayed on the output window 151a is attempted.

Besides, the display 151 or the touchpad 135 can be configured to receive a touch input by scroll. A user scrolls the display 151 or the touchpad 135 to shift a cursor or pointer located at an entity (e.g., icon or the like) displayed on the display 151. Furthermore, in case that a finger is shifted on the display 151 or the touchpad 135, a path of the shifted finger can be visually displayed on the display 151. This may be useful in editing an image displayed on the display 151.

To cope with a case that both of the display (touch screen) 151 and the touchpad 135 are touched together within a predetermined time range, one function of the terminal can be executed. The above case of the simultaneous touch may correspond to a case that the terminal body is held by a user using a thumb and a first finger (clamping). The above function can include activation or deactivation for the display 151 or the touchpad 135.

For clarity and convenience of the following description, a mobile terminal mentioned in the following description is assumed as including at least one of the components shown in FIG. 1. Meanwhile, such a graphic for pointing at a specific object on a display unit or selecting a menu from the display unit as an arrow, a finger and the like is called a pointer or a cursor. Yet, the pointer is frequently used to mean a finger, a stylus pen or the like for a touch manipulation and the like. In order to clearly discriminate the pointer and the cursor from each other in this disclosure, a graphic displayed on a display unit is named a cursor and such a physical means for performing a touch, a proximity touch, a gesture and the like as a finger, a stylus pen and the like is named a pointer.

In general, an application is conceptionally used as software separately installed and/or executed. Yet, an application mentioned in the description of the present invention conceptionally indicates all targets that visually display information on a prescribed region when a specific function is executed. The controller 180 of the mobile terminal according to the present invention is able to control at least two applications simultaneously (i.e., multi-tasking). The executed applications are simultaneously displayed on partitioned screens of the display unit 151, respectively. Alternatively, one of the executed applications is displayed on a whole screen of the display unit 151. Alternatively, one of the executed applications is displayed on the screen in a manner of blocking at least one portion of a region related to another application. Further, although an execution screen of an application is displayed on the display unit 151, respective execution screen of applications to be shared via an external device can be updated on the real time basis.

Control & Contents Play/Exchange through Connection to External Device

Recently, the great performance improvement of a processor of a mobile terminal, i.e., the controller 180, enables high-level operations. And, the performance improvement of the wireless communication unit 110 enables high-speed data communications through various wireless interfaces. Hence, data sharing between one mobile terminal and another mobile terminal or a digital device having a display device, and more particularly, image/contents sharing is made possible. Of course, the data sharing between the devices can be performed by wire/wireless.

Ongoing standardizations of the mutual compatibility technology for contents exchanges between digital devices are internationally in progress. And, one of the standardizations may include DLNA (digital living network alliance). The DLNA standard proposes various conditions and methods for the mutual data exchanges among various kinds of digital devices. A connecting method, specifications and the like in the embodiments of the presence invention can be supplemented by the DLNA standard documents, by which the present invention is non-limited. Moreover, the present invention can be performed via various kinds of communication interfaces (e.g., Wi-Fi, Bluetooth, IEEE1394, USB, infrared communication, etc.). In order to deliver a content to a renderer from a server, a source of the content is intactly delivered and then reproduced, a screen shot of a still cut is transmitted by sampling a video of a displayed content by specific periodicity, or a real-time video streaming in a prescribed frame can be used. Besides, after a separate sharing application for contents sharing has been installed each of the server and the renderer, data exchange can be performed according to the type defined in the sharing application.

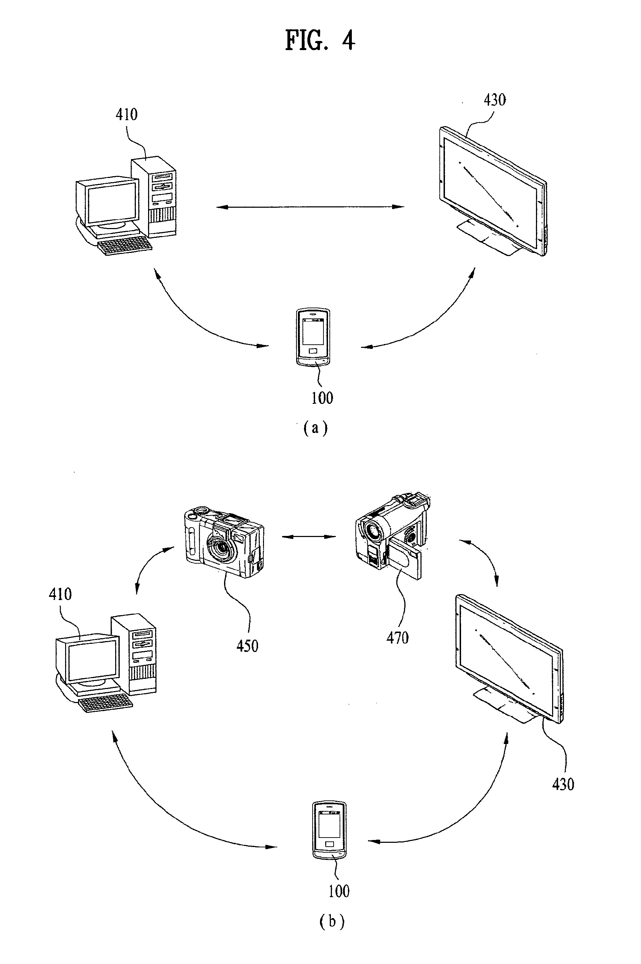

FIG. 4 is a diagram for an example of connections among digital devices applicable to embodiments of the present invention.

Referring to FIG. 4 (a), a terminal 100 according to the present invention is connected to a computer 410 and a television 430 by wire/wireless to perform contents/data exchanges with the connected computer or television. In doing so, contents sharing can be performed in a following manner. First of all, one device plays a role as a content server configured to supply a content to the other device and the other plays a role as a renderer configured to receive and display the corresponding content. Alternatively, one device plays a role as a controller configured to control a device playing a role as a content server and the other performs a content display function only. For instance, if the computer 410 becomes a content server, the mobile terminal 100 controls the computer 410 to enable a specific content in the computer 410 to be displayed on the television 430. In addition, the inter-device connection according to the present invention can be configured in a manner that a content server also performs a control function and that a renderer responsible for a display of contents performs the control function together.

In this case, the contents sharing methods may include a method for a server device to transmit an image information (e.g., a frame buffer) recognizable by a display means to a renderer device and a method including the steps of activating an application of a previously agreed type in each device in the first place and then exchanging control data to change video/audio information outputted from a renderer device. Moreover, in case that an operating system or platform used for sharing is compatible between devices, it is able to use a method including the steps of transmitting an application installation file (e.g., APK file for Android) from one device to another device, completing installation of the corresponding application on each of the devices, and transmitting control data only to a renderer device from a server device or a controller device. Besides, in case of playing back a multimedia content having a prescribed compression format, a codec for decoding may be provided to the renderer device prior to the playback. Of course, a multimedia file is transmitted to the renderer device to be played back via a play application retained by the renderer device.

The above-described inter-device connection can be configured in a mannerof further including a digital camera 450 and a digital camcorder 470, as shown in FIG. 4 (b).

Simultaneous Sharing of Execution screens of a Plurality of Applications

According to one embodiment of the present invention, while a mobile terminal is connected to at least one of external devices provided with display means, a method of displaying (i.e., mirroring) execution screens of a plurality of applications running in the mobile terminal via the displays means of the connected at least one external device is provided. In particular, a user interface (hereinafter named a mirroring UI for clarity) for controlling at least one of the applications mirrored by the external device can be displayed on the touchscreen 151 of the mobile terminal. In doing so, a means (e.g., a virtual keypad, a navigation key, etc.) required for controlling the at least one of the mirrored applications may be displayed on the UI independently or together with at least one portion of the execution screen.

According to the present embodiment, assume that the mobile terminal performs a controller & content server function and assume that the external device performs a renderer function. According to the present embodiment, assume that the mobile terminal performs all operations and calculations to create images. And, assume that an action of forwarding the created image resulting from the operations and calculations to the external device is included in the controller & content server function.

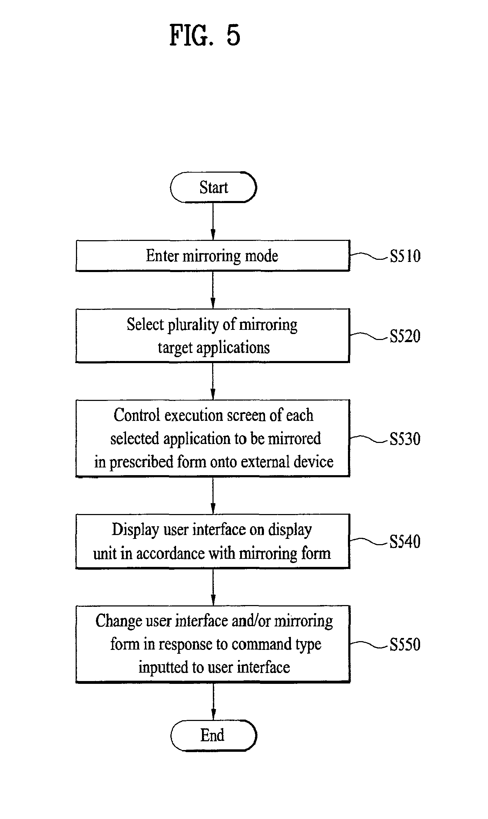

An execution screen sharing method according to the present embodiment is described with reference to FIG. 5 as follows.

FIG. 5 is a flowchart for one example of a process for displaying execution screens of a plurality of applications through an external device according to one embodiment of the present invention.

Referring to FIG. 5, if a user's command input is applied or an event occurs, the controller 180 activates a mirroring mode for displaying contents of the mobile terminal on an external device and is then able to establish a data path for an image sharing with a connectible external device [S510].

In this case, the user's command input may include at least one of a selection of a menu or icon via the user input unit 120, a touch input of a prescribed pattern, a manipulation of a specific key button and the like. And, the occurrence of the event may include one of a case of finding the connectible external device, a case of receiving a connection request from the connectible external device, a case of detecting a connection (e.g., a detection of an inserted plug of a wired communication cable, etc.) under a prescribed protocol in the interface unit 170, and the like.

The data path for the image sharing with the external device can be performed in a following manner. First of all, the controller 180 searches external devices for a connectible external device using the wireless communication unit 110 and/or the interface unit 170 and then displays a search result on the display unit 151. Secondly, if a user inputs a selection command to the user input unit 130, the controller 180 connects the mobile terminal 100 to the external device corresponding to the inputted selection command. Alternatively, the controller 180 may select a device, which is to be connected automatically in accordance with a preset reference, without the user's selection command.

After the mirroring mode has been activated, a plurality of applications, which are to be shared, i.e., a plurality of mirroring target applications can be selected in response to the user's command input or under default settings [S520].

As a plurality of the sharing target applications are selected, a mirroring can be initiated via a display means of the external device in a manner that execution screens of the selected applications are arranged in a prescribed form [S530].

In this case, sizes or locations of the execution screens displayed via the display means of the external device may differ from each other under predetermined settings or in order of the selected applications in the step S520. For instance, in case that the sizes or locations of the mirrored execution screens are determined in the selected order, the execution screen of the earliest selected application may be displayed in a largest size or at a specific location such as a center and the like. Of course, the respective execution screens may be displayed in equal size on the display means of the external device depending on the number of the selected applications.

On the other hand, as the mirroring target applications are selected, a mirroring UI may be displayed on the touchscreen of the mobile terminal 100 [S540]. As mentioned in the foregoing description, the mirroring UI includes a user interface for controlling an application mirrored by the external device. The mirroring UI may be configured differently depending on an arrangement form of an execution screen of each of the applications. For instance, a means for controlling an application, of which execution screen is displayed in a largest size on the display means of the external device, may be displayed in a largest size on the mirroring UI. For another instance, when active images of two applications are displayed on left and right sides of the display means of the external device, respectively, a means for controlling the application having its execution screen displayed on the right side can be displayed on a right side of the mirroring UI.

The above-described steps S530 and S540 may be simultaneously executed after the step S520 or may be sequentially executed in a predetermined order.

Thereafter, the arranged state of the execution screens of the mirrored applications and/or the configuration of the mirroring UI can be changed in response to a type of a user's command input via the mirroring UI [S550].

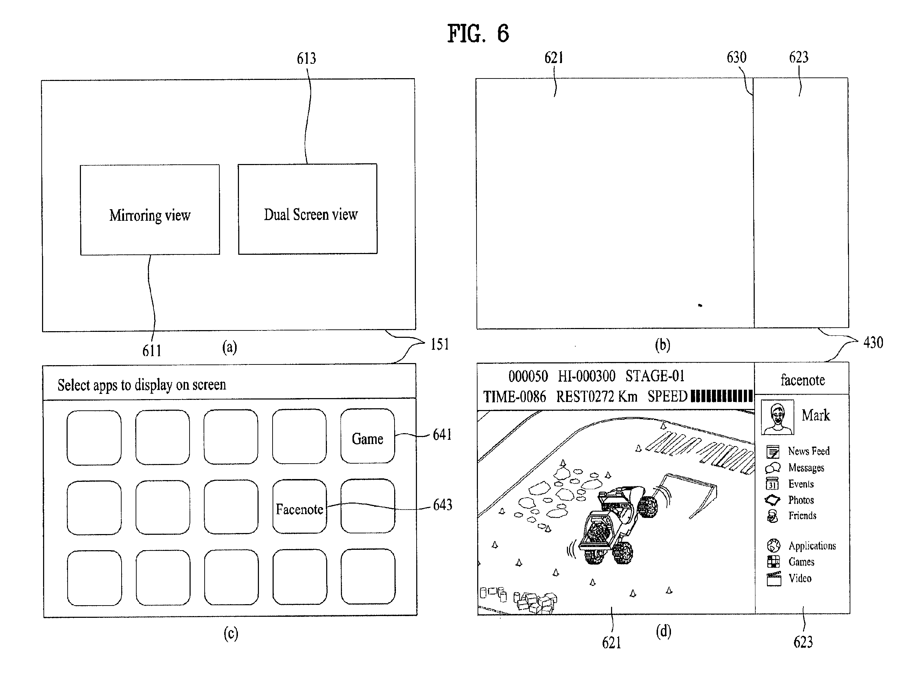

In the following description, the above-described method of mirroring the active images of a plurality of the applications is explained in detail with reference to FIG. 6.

FIG. 6 is a diagram for one example of a process for sharing mirroring images of a plurality of applications in a mobile terminal with an external device according to one embodiment of the present invention.

For clarity of the description with reference to the accompanying drawings including FIG. 6, assume that an external device configured to display an execution screen of each application in a mirroring mode includes a smart TV 40. And, assume that two applications (i.e., a game application and an SNS application) are selected as mirroring target applications. In this case, assume that a means for controlling the game application includes a virtual game controller including a navigation key and a plurality of key buttons. And, assume that a means for controlling the SNS application includes a virtual keypad.

Referring to FIG. 6, as a sharing mode is activated in the mobile terminal 100, if a data path settings is competed with a TV 430, a mode select menu can be displayed as an initial screen on the touchscreen of the mobile terminal 100 [FIG. 6 (a)]. In doing so, if a user selects a menu 611 on the left side, a general mirroring mode for displaying an execution screen (hereinafter named a mirroring image for clarity) of one application on an external device can be activated. On the contrary, if a menu 612 on the right side is selected, a mode for mirroring a plurality of mirroring images according to the present embodiment can be entered. In FIG. 6 (a), since the two applications are assumed, such a mode shall be named a dual-screen view for clarity.

If the dual-screen view 613 is selected, referring to FIG. 6 (b), a left mirroring region 621 and a right mirroring region 623 are configured with reference to a partition line 630. In doing so, the left mirroring region 621 may be configured larger than the right mirroring region 623. In this case, a larger region may be named a main mirroring region. And, a mirroring image of the early-selected application in the aforementioned step S520 may be displayed on the main mirroring region. A smaller region may be named a sub-mirroring region. And, a mirroring image of the later-selected application in the aforementioned step S520 may be displayed on the sub-mirroring region. Since there is a size difference between the main mirroring region and the sub-mirroring region, an execution screen of the selected-later application can be displayed on the sub-mirroring region in a manner of being reduced at a prescribed rate. Alternatively, an execution screen of the selected-later application can be partially displayed on the sub-mirroring region.

Of course, the selection order and the mirroring region assigning method are exemplary. Alternatively, the mirroring image of the selected-later application may be displayed on the main mirroring region. Optionally, the partition line 630 may not be displayed.

Meanwhile, as the dual-screen view is selected, referring to FIG. 6 (c), an application list for selecting a mirroring target application may be displayed on the touchscreen 151 of the mobile terminal 100. In doing so, the application list can be displayed in a manner that icons corresponding to applications are arranged in a prescribed form. Subsequently, a user selects an icon 641 corresponding to a game application and an icon 643 corresponding to an SNS application from the application list in sequence (using a touch input).

If so, referring to FIG. 6 (d), a mirroring image of the game application may be displayed on the left mirroring region 621 of the TV 430, while a mirroring image of the SNS application may be displayed on the right mirroring region 623.

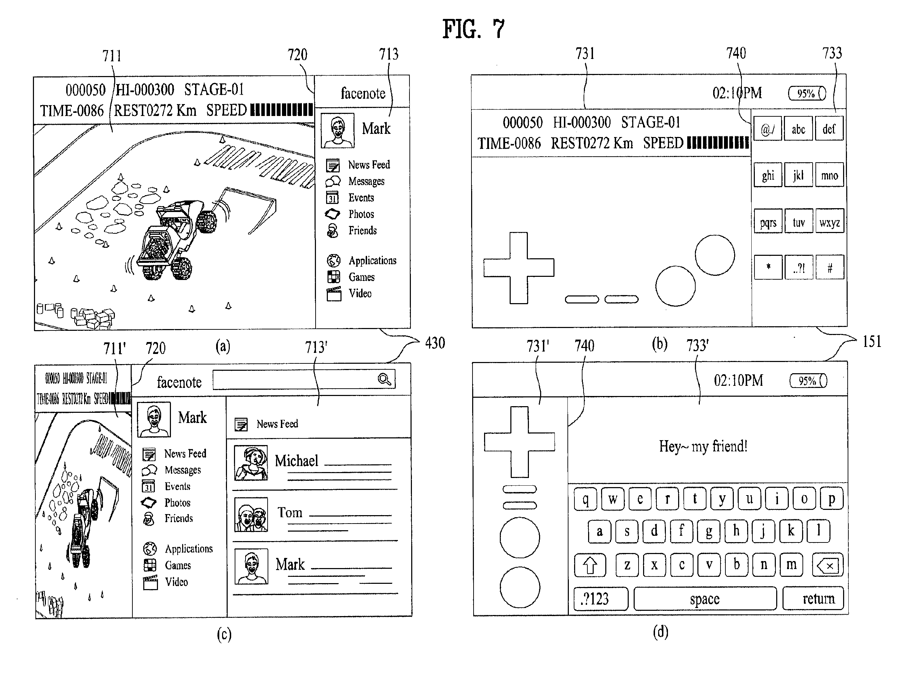

In the following description, a mirroring UI and a switching between a main mirroring region and a sub-mirroring region in response to an arrangement configuration of each mirroring image are explained with reference to FIG. 7.

FIG. 7 is a diagram for one example of a switching between mirroring regions and a mirroring UI configuration changed in response to the switching in a mobile terminal according to one embodiment of the present invention.

In FIG. 7, assume a situation after two mirroring target applications have been selected.

Referring to FIG. 7, a mirroring image of a game application is displayed on a left mirroring region 711 of a TV 430 and a mirroring image of an SNS application may be displayed on a right mirroring region 713, with reference to a partition line 720 [FIG. 7 (a)].

In response, referring to FIG. 7 (b), a control means for controlling an early-selected game application and a control means for controlling a later-selected SNS application can be displayed on a left control region 731 and a right control region 733 of a mirroring UI displayed on the touchscreen 151 of the mobile terminal with reference to a partition line 740, respectively. In this case, the left control region 731 may become a main control region corresponding to a main mirroring region and the right control region 733 may become a sub-control region corresponding to a sub-mirroring region.

In this case, a size ratio between the mirroring regions in the TV 430 may preferably correspond to a size ratio between the control regions in the mirroring UI on the touchscreen. In a manner similar to that of the sub-mirroring region, due to the size difference between the main control region and the sub-control region, the control means of the later-selected application may be displayed on the sub-control region by being reduced at a prescribed rate or a may be displayed partially. Alternatively, a control means may be displayed on the sub-control region in a manner that its arrangement form is changed to be suitable for the sub-control region or that controllable functions are simplified. For instance, referring to FIG. 7 (b), a plurality of key values may be assigned to a plurality of key buttons arranged on the virtual keypad, respectively.

Through the arrangements of the control regions and the mirroring regions, a user is able to conveniently control the application displayed on the main mirroring region using the control means provided to the main control region and is also able to check and control the application displayed on the sub-mirroring region via the sub-control region.

If the user applies a specific touch input (e.g., a long touch) to the right control region or drags the partition line 720 in left direction, referring to FIG. 7 (c), sizes of the mirroring regions can be mutually changed. In this case, a reduced left region 711' may become a sub-mirroring region and an enlarged right region 713' may become a main mirroring region.

In response, the configuration of the mirroring UI on the touchscreen 151 can be changed. In particular, referring to FIG. 7 (d), a reduced left control region 731' may become a sub-control region and an enlarged right control region 733' may become a main control region. Moreover, the game controller of the left control region may be rearranged to fit the reduced sizes of the buttons and the keypad of the right control region may be changed into a general QWERTY type keypad from the previous configuration in which a plurality of the key values are assigned to a plurality of the key buttons, respectively.

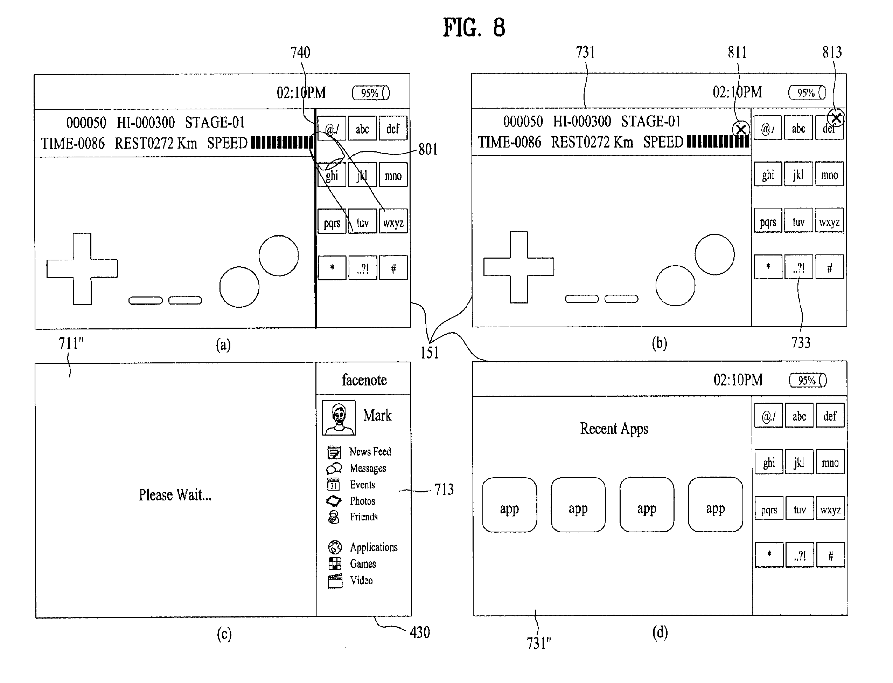

In the following description, a process for ending one of two applications is explained with reference to FIG. 8.

FIG. 8 is a diagram for one example of a process for ending a mirroring target application in a mobile terminal according to one embodiment of the present invention.

Referring to FIG. 8, assume a case after two mirroring target applications have been selected. First of all, a control means for controlling an early-selected game application and a control means for controlling a later-selected SNS application can be displayed on a left control region and a right control region of a mirroring UI displayed on the touchscreen 151 of the mobile terminal with reference to a partition line 740, respectively [FIG. 8 (a)]. In this situation, if a user applies a touch input of a specific type (e.g., a long touch, etc.) to the partition line 740 with a pointer 801, application end indicators 811 and 813 can be displayed on edges of the control regions, respectively [FIG. 8 (b)]. If the application end indicator 811 in the left control region is selected, the game application can be ended.

As the game application is ended, referring to FIG. 8 (c), a default image may be displayed on a left mirroring region 711" of a TV 430 until the mirroring target application is selected again. In doing so, a right mirroring region 713 can be maintained as it is.

Moreover, referring to FIG. 8 (d), an application list for selecting a new mirroring target application can be displayed on a left control region 731" of a mirroring UI. In this case, the application list may include icons respectively corresponding to recently activated applications [FIG. 8 (d)] or icons respectively corresponding to mirroring-possible applications irrespective of a presence or non-presence of recent activation [FIG. 6 (c)]. If one application is selected from the application list, an execution screen of the selected application is displayed on the left mirroring region and a control means for controlling the selected application may be displayed on the left control region.

In the situation shown in FIG. 8 (d), if the user selects the application end indicator 813 appearing on the right control region after long touching the partition line 740 again, the mirroring mode of the present embodiment can be ended.

Mirroring in Response to Event Occurrence

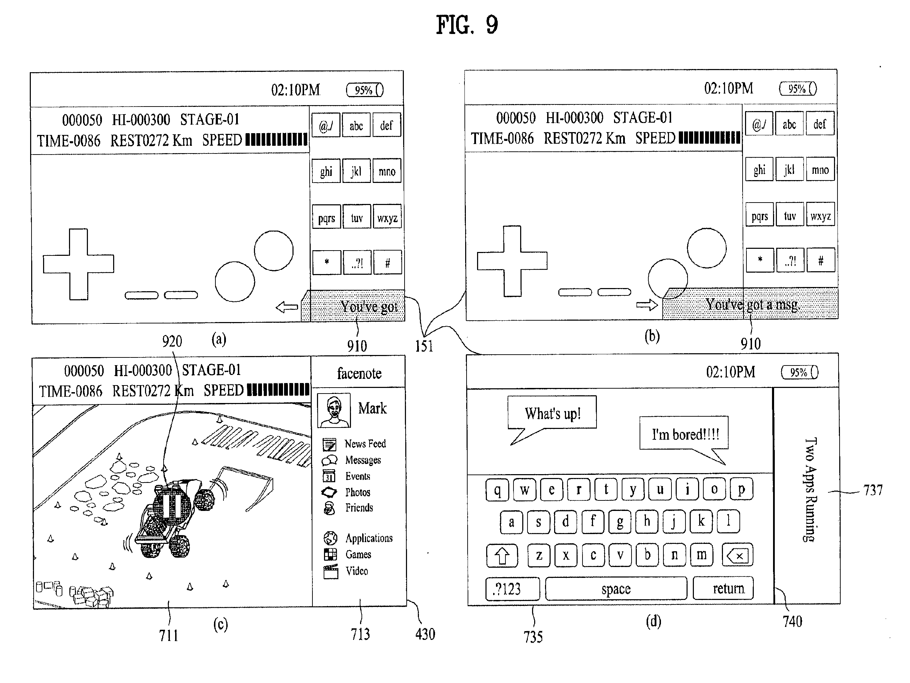

In the following description, operations of mirroring regions and a mirroring UI in case of an event occurrence in a mirroring mode according to the present embodiment are explained with reference to FIG. 9.

FIG. 9 is a diagram for one example of an operation corresponding to an event occurrence in the course of an active mirroring mode in a mobile terminal according to one embodiment of the present invention.

Referring to FIG. 9, assume a situation in which the mirroring mode, as shown in FIG. 7 (a) and FIG. 7 (b), is active. In this case, if a text message (e.g., SMS message) is received for example of an event, referring to FIG. 9 (a), a popup window 910, which indicates that a message is received, can appear in left direction from a right bottom end of the touchscreen 151. Depending on settings, a presence or non-presence of a message arrival only or a message content may be displayed on the popup window 910. If the popup window 910 moves in the left direction and then arrives at a specific location (e.g., a center of the touchscreen, a partition line, etc.), it may continue to be displayed until a user's command input is applied. Alternatively, the popup window 910 gradually moves toward a left side of the touchscreen and may then disappear from a left edge of the touchscreen. Alternatively, after the popup window 910 has arrived at a specific location, if a prescribed time expires, the popup window 910 can disappear automatically. While the popup window 910 is being displayed, the mirroring images displayed on a TV 430 may be maintained as they are. And, an object identical or similar to the popup window 910 may be displayed on the TV 430.

In doing so, if a user ignores the corresponding event or intends to check the corresponding event later, referring to FIG. 9 (b), the user drags the popup window 910 in right direction to make the popup window 910 disappear from the touchscreen. Hence, a process for the corresponding event can be ended. On the contrary, if the user intends to check a content of the event (e.g., SMS message), the user may drag the popup window 910 in the left direction or apply a touch input to the popup window 910. In this case, an application, which requires a real-time control, among the mirroring target applications can automatically pause. For instance, referring to FIG. 9 (c), as the game application temporarily pauses, an indicator 920, which indicates that the corresponding application pauses, can be displayed on the left mirroring region 711. Moreover, since the SNS application displayed on the right mirroring region does not require an instant control, it can be maintained without a pause.

Meanwhile, in the mirroring UI displayed on the touchscreen 151, referring to FIG. 9 (d), an SNS application is displayed on a main control region 735 and information indicating that two applications are running can be displayed on a sub-control region 737. If the SMS message received via the SMS application is completely confirrned, as mentioned in the foregoing description with reference to FIG. 8, the user applies a long touch to the partition line 740 and is then able to page an end indicator. As the end indicator corresponding to the SMS application is selected, the TV 430 can return to the situation (i.e., the situation shown in FIG. 7 (a)) before the event occurrence and the touchscreen 151 can return to the situation (i.e., the situation shown in FIG. 7 (b)) before the event occurrence.

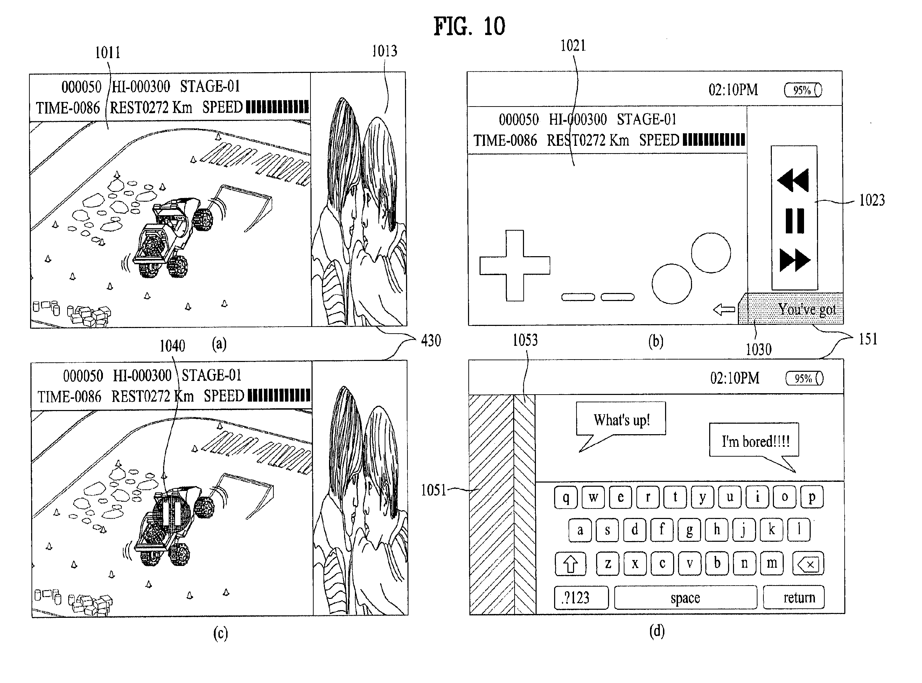

In FIG. 9, it is assumed that a 3^{rd} application is temporarily activated and then ended in accordance with an event occurrence in a situation that two mirroring target applications are mirrored. Yet, if the 3^{rd} application is paged once, it can be set to keep remaining on the mirroring UI. This is described with reference to FIG. 10 as follows.

FIG. 10 is a diagram for another example of an operation corresponding to an event occurrence in the course of an active mirroring mode in a mobile terminal according to one embodiment of the present invention.

Referring to FIG. 10, a mirroring image of a game application is displayed on a left mirroring region 1011 and a mirroring image of a video play application is displayed on a right mirroring region 1013 [FIG. 10 (a)]. Hence, in a mirroring UI, referring to FIG. 10 (b), a game controller is displayed on a left control region 1021 and a video play controller is displayed on a right control region 1023.

In doing so, if a text message (e.g., SMS message) is received for example of an event, a popup window 1030, which indicates that a message is received, can appear in left direction from a right bottom end of the touchscreen 151. If a user intends to check a content of the event (i.e., SMS message), the user may drag the popup window 1030 in left direction or apply a touch input to the popup window 1030. Hence, referring to FIG. 10 (c), as the game application temporarily pauses, an indicator 1040, which indicates that the corresponding application pauses, can be displayed on the left mirroring region 1011. In doing so, a video playback may pause in the video play application displayed on the right mirroring region 1013.

Meanwhile, referring to FIG. 10 (d), the control means for the previous applications are changed into bars 1051 and 1053 and then arranged on one side of the mirroring UI displayed on the touchscreen 151 and the SMS application can be displayed on a largest region of the mirroring UI. In this case, regarding the bar generated from the control mean by being changed, a side-arranged form of the corresponding bar can be determined depending on a relative location and size of the control means used to be displayed on the mirroring UI before the event occurrence. For instance, the bar 1051 corresponding to the game controller used to occupy a relatively large area in FIG. 10 (b) is thicker than the bar 1053 corresponding to the play controller used to occupy a relatively small area and can be arranged to the left side of the bar 1053.

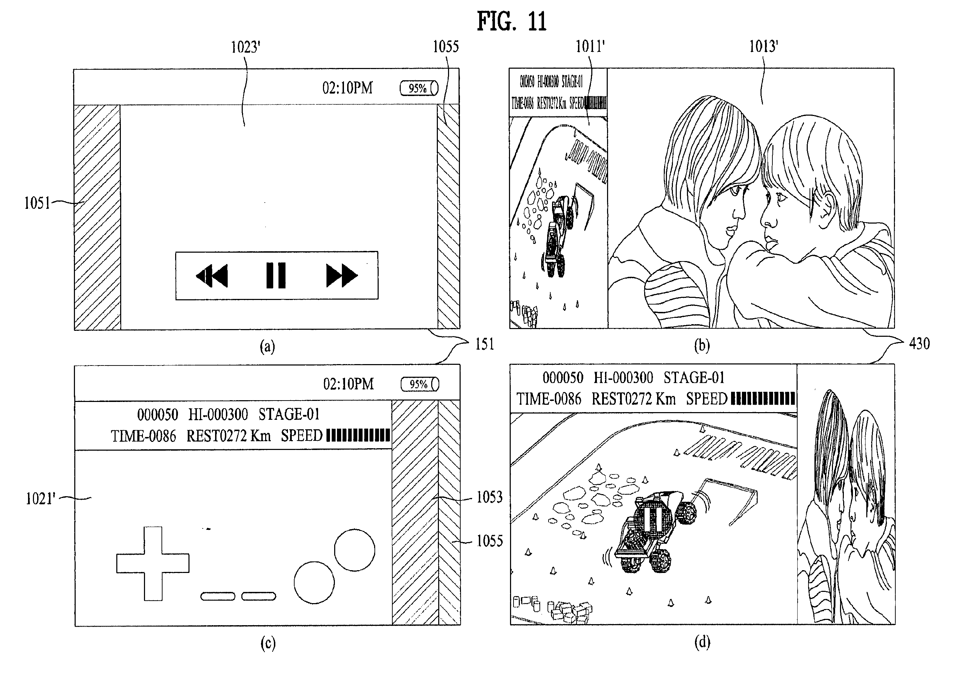

In the following description, in the situation shown in FIG. 10 (d), a method of switching a main mirroring region is explained with reference to FIG. 11.

FIG. 11 is a diagram for a further example of an operation corresponding to an event occurrence in the course of an active mirroring mode in a mobile terminal according to one embodiment of the present invention.

First of all, assume that the operation shown in FIG. 11 follows the former operation shown in FIG. 10. In particular, in the situation shown in FIG. 10 (d), if the bar 1053 corresponding to the paly controller is selected by a user's touch input, referring to FIG. 11 (a), the SMS application is changed into a bar 1055 and then moves to a right side and the play controller can be displayed as a main control means on a center 1023' of the mirroring UI.

Hence, referring to FIG. 11 (b), a mirroring image 1011' of the game application is reduced in the TV 430 and a mirroring image 1013' of the video play application is enlarged to become a main mirroring image.

In case that the user intends to change the mirroring image of the game application into a main mirroring image again, the user can select the bar 1051 corresponding to the game controller by applying a touch input. Hence, referring to FIG. 11 (c), the play controller is changed into a bar 1053 and then moves to a right side and the game controller can be displayed as a main control means on a left side 1021' of the mirroring UI. Of course, in the TV 430, referring to FIG. 11 (d), the mirroring image 1013 of the video play application is reduced and the mirroring image 1011 of the game application is enlarged to become a main mirroring image.

Activation of 3^{rd} Application in Response to User's Command Input

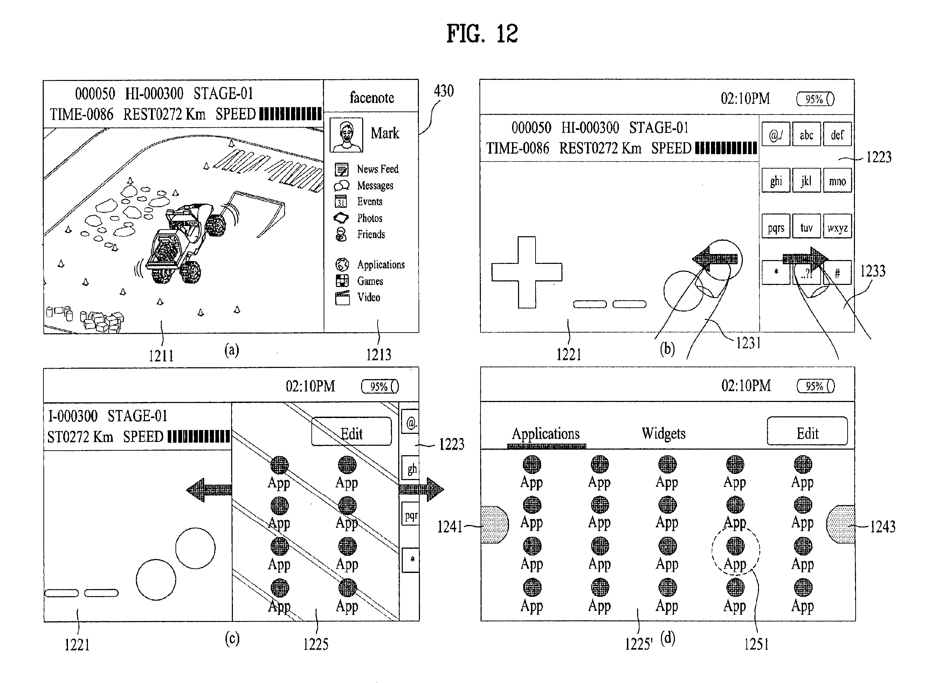

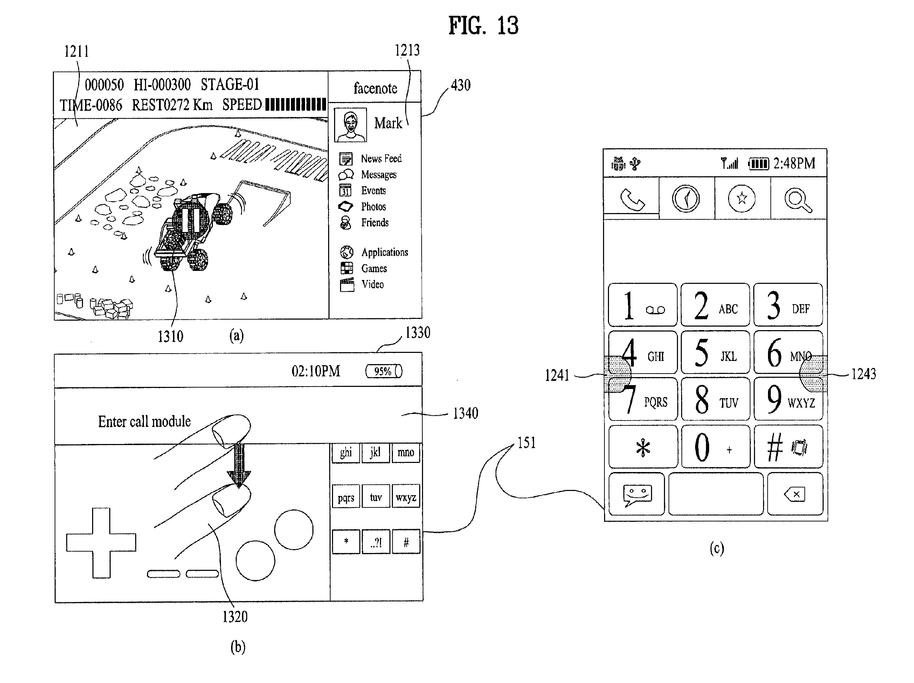

Meanwhile, according to another embodiment of the present invention, a 3^{rd} application can be activated in response to a user's command input as well as to an event occurrence. This is described with reference to FIG. 12 and FIG. 13 as follows.

FIG. 12 is a diagram for one example of a process for activating an additional application in the course of an active mirroring mode in a mobile terminal according to another embodiment of the present invention.

Referring to FIG. 12, a mirroring image of a game application is displayed on a left mirroring region 1211 of a TV 430 and a mirroring image of a video play application is displayed on a right mirroring region 1213 of the TV 430 [FIG. 12 (a)]. Hence, in a mirroring UI, referring to FIG. 12 (b), a game controller is displayed on a left control region 1221 and a video play controller is displayed on a right control region 1223. In doing so, a user touches the left control region 1221 and the right control region 1223 with one pointer 1231 and another pointer 1233, respectively, and is then able to drag the pointers 1231 and 1233 in opposite directions to make the two pointers 1231 and 1233 get away from each other.

Hence, referring to FIG. 12 (c), an application list can be displayed on a region 1225 generated from moving the control regions in the drag directions, respectively. After completion of the movements of the control regions, referring to FIG. 12 (d), the control regions are changed into tabs 1241 and 1243 on both sides, respectively, and the newly generated region can be displayed as a full screen 1225'. If the user selects one of the icons displayed on the newly generated region 1225', a new application can be activated in the corresponding region 1225'.

If the user drags the left tab 1241 in a right direction, the mirroring UI can return to the state shown in FIG. 12 (b). If the user drags the right tab 1243 in a left direction, the mirroring UI can return to the state shown in FIG. 7 (d). In particular, a main control region and an application displayed on a main mirroring region can be determined in accordance with a dragged tab.

In the following description, a method of changing a mirroring region after activation of a new application and a method of returning to a previous state are explained with reference to FIG. 13.

FIG. 13 is a diagram for another example of a process for activating an additional application in the course of an active mirroring mode in a mobile terminal according to another embodiment of the present invention.

Referring to FIG. 13, assume a case that an icon 1251 corresponding to a call (or phone) application is selected in FIG. 12 (d). As the call application is activated, the game application pauses and an indicator 1310, which indicates a pause, can be displayed on a corresponding mirroring image 1211, in the TV 430 [FIG. 13 (a)].

On the touchscreen 151 of the mobile terminal, referring to FIG. 13 (b), the call application is displayed as a full screen and tabs 1241 and 1243, which are generated from control regions by being changed, can be displayed on both sides of displayed call application, respectively. If the user no longer uses the call application or intends to return to a previous state, as mentioned in the foregoing description, the user can drag each of the tabs 1241 and 1243 in a center direction. For instance, if the user drags the left tab 1241 in the right direction, the mirroring UI can return to the state shown in FIG. 12 (b). For another instance, if the user drags the right tab 1243 in the left direction, the mirroring UI can return to the state shown in FIG. 7 (d). In particular, a main control region and an application displayed on a main mirroring region can be determined in accordance with a dragged tab.

If a user intends to re-activate a 3^{rd} application used to be activated once, the user can apply a touch & drag input in a bottom direction to an indicator region 1330 provided to a top end of the touchscreen 151. If so, a layer 1340, which is arranged on a layer upper than that of the mirroring UI (i.e., this layer covers the mirroring UI), can be displayed from the indicator region 1330. In particular, a short layer to a last activated 3^{rd} application is displayed on the layer 1340. If the corresponding menu is selected by a touch input, it may return to the state shown in FIG. 13 (b).

Meanwhile, according to the above-mentioned embodiments, the event is described as the SMS, by which the present invention may be non-limited. And, the present invention is applicable to such an event occurrence as an incoming call signal reception, an email reception, a push indication of an application, an expiration of an alarm hour and the like. And, a control means for controlling an application is described on the assumption of a game controller, a play controller, a virtual keypad or the like, by which the present invention may be non-limited. And, the present invention is applicable to an active application screen exactly corresponding to a mirroring image, a handwriting recognition region, and a combination thereof.

It will be apparent to those skilled in the art that various modifications and variations can be specified into other form(s) without departing from the spirit or scope of the inventions.

According to one embodiment of the present invention, the above-described methods can be implemented in a program recorded medium as processor-readable codes. The processor-readable media include all kinds of recording devices in which data readable by a processor are saved. The processor-readable media include ROM, RAM, CD-ROM, magnetic tapes, floppy discs, optical data storage devices, and the like for example and also include carrier-wave type implementations (e.g., transmission via Internet).

The aforementioned embodiments are achieved by combination of structural elements and features of the present invention in a predetermined type. Each of the structural elements or features should be considered selectively unless specified separately. Each of the structural elements or features may be carried out without being combined with other structural elements or features. Also, some structural elements and/or features may be combined with one another to constitute the embodiments of the present invention.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method of a mobile terminal, the method comprising:
receiving a selection, at the mobile terminal, of a first application and a second application(S520);
displaying an execution screen of the first application on a first mirroring region of a first display of an external device(S530);
displaying an execution screen of the second application on a second mirroring region of the first display of the external device(S530);
displaying, on a first control region of a second display on the mobile terminal, a first control object to control the first application(S540); and
displaying, on a second control region of the second display of the mobile terminal, a second control object to control the second application(S540).

2. The method of claim 1, wherein a size ratio between the first mirroring region and the second mirroring region on the first display of the external device corresponds to a size ratio between the first control region and the second control region on the second display of the mobile terminal.

3. The method of claim 2, wherein a mirroring region and a control region corresponding to an earlier selected one of the first application and the second application are configured to be larger than a mirroring region and a control region corresponding to the other one of the first application and the second application.

4. The method of claim 2, further comprising:
receiving a selection of a smaller one of the first control region and the second control region; and
reversely changing the size ratio between the first control region and the second control region(S550).

5. The method of claim 4, further comprising reversely changing the size ratio between the first mirroring region and the second mirroring region in response to the selection of the smaller one of the first control region and the second control region(S550).

6. The method of any one of claims 2 to 5, further comprising:
receiving an occurrence of an event; and
displaying, on the second display of the mobile terminal, indication information regarding the occurrence of the event(S550).

7. The method of claim 6, further comprising:
receiving a selection of the indication information;
controlling the first control region and the second control region to move to one edge of the second display of the mobile terminal and be reduced in size; and
displaying, on a third control region of the second display of the mobile terminal, an application related to the event.

8. The method of claim 7, further comprising:
receiving a selection of one of the reduced first control region and the reduced second control region;
controlling the second display to remove the third control region;
controlling the reduced first control region to change to a similar state as before the occurrence of the event; and
controlling the reduced second control region to change to a similar state as before the occurrence of the event.

9. The method of claim 6, wherein the event comprises one of a message reception, an email reception, a call signal reception, an expiration of a preset alarm hour and a push indication.

10. The method of any one of claims 1 to 9, further comprising:
receiving a selection of a boundary between the first control region and the second control region;
displaying an end indicator on each of the first control region and the second control region; and
controlling, in response to selection of one of the end indicators, a mirroring image to disappear from a mirroring region corresponding to the selected end indicator.

11. The method of claim 10, further comprising:
displaying, on the second display of the mobile terminal, an application list on a control region corresponding to the selected end indicator;
receiving a selection of a third application from the application list;
displaying, on the control region corresponding to the selected end indicator, a third control object to control the third application; and
displaying, on the first display of the external device, a third mirroring region corresponding to an execution screen of the third application on a mirroring region corresponding to the selected end indicator.

12. A mobile terminal comprising:
a user input unit(130) configured to receive inputs from a user;
a communication unit(110) configured to communicate with an external device that includes a first display;
a second display(151); and
a controller(180) **characterized in that** the controller is configured to establish a communication with the external device via the communication unit, wherein in response to a selection of a first application and a second application based on inputs via the user input unit, the controller provides information to the external device to control an execution screen of the first application to be displayed on a first mirroring region of the first display and controls an execution screen of the second application to be displayed on a second mirroring region of the first display, and the controller controls the second display such that a first control object to control the first application is displayed on a first control region of the second display and a second control object to control the second application is displayed on a second control region of the second display.

13. The mobile terminal of claim 12, wherein the controller provides information to the external device such that a size ratio between the first mirroring region and the second mirroring region of the first display of the external device corresponds to a size ratio between the first control region and the second control region on the second display of the mobile terminal.

14. The mobile terminal of claim 13, wherein the controller provides information to the external device such that a mirroring region and a control region corresponding to an earlier selected one of the first application and the second application are configured to be larger than a mirroring region and a control region corresponding to the other one of the first application and the second application.

15. The mobile terminal of claim 13, wherein in response to receiving a selection of a smaller one of the first control region and the second control region, the controller reversely changes the size ratio between the first control region and the second control region.
